# EUROPEAN PATENT APPLICATION

(11) **EP 4 692 266 A1**
(43) Date of publication of application: **11.02.2026**
(21) Application number: 24923277.8
(22) Date of filing: 30.08.2024
(51) Int. Cl.: C09J 133/02, H01M 10/0525, C09J 133/20, C08F 220/06, C08F 220/48, C08F 220/54, C08F 228/02, C08F 220/18, H01M 4/62, H01M 4/13

(54) **WATER-SOLUBLE BINDER, BATTERY ELECTRODE SHEET AND USE THEREOF**

(30) Priority: 07.02.2024 CN 202410172149
(71) Applicant: Shenzhen Yanyi New Materials Co., Ltd., Shenzhen, Guangdong 518110 (CN); ZHEJIANG YANYI NEW ENERGY TECHNOLOGY CO., LTD., Zhejiang 324100 (CN)
(72) Inventor: LIU, Jun, Shenzhen, Guangdong 518110 (CN); HUANG, Mianbin, Shenzhen, Guangdong 518110 (CN); LIANG, Huaqing, Shenzhen, Guangdong 518110 (CN)
(74) Representative: Michalski Hüttermann & Partner Patentanwälte mbB
(86) International application number: PCT/CN2024/115687
(87) International publication number: WO 2025/167067

(57) **Abstract**

A water-soluble binder, a battery electrode sheet and the use thereof. The water-soluble binder comprises a copolymer. Polymeric monomers of the copolymer comprise a combination of a double-bond-containing nitrile monomer, a double-bond-containing amide monomer, a double-bond-containing carboxylic acid monomer, optionally a double-bond-containing sulfonic acid monomer and optionally a fifth monomer. The water-soluble binder is in the form of powder, and the mass percentage content of the copolymer in the water-soluble binder is greater than or equal to 92%. By means of the design of the polymeric monomers and the copolymer and the combination of the copolymer and the powder form, the water-soluble binder has excellent binding power, and can effectively inhibit the volume expansion of an electrode sheet during charge and discharge cycles, thereby improving the cycling performance of the electrode sheet and a lithium-ion battery.

## Description

### TECHNICAL FIELD

The present application belongs to the technical field of battery materials, and specifically relates to a water-soluble binder, a battery electrode sheet, and use thereof.

### BACKGROUND

Lithium-ion batteries are currently widely used in mobile electronic products, electric vehicle industries, and energy storage fields due to their such characteristics as high energy density and excellent cycling performance. At present, the negative electrode system of commercial lithium-ion batteries is mainly graphite negative electrode, but the theoretical capacity of graphite as an active substance is low, making it difficult to meet the needs of the rapid development of energy technology. The silicon-based material exhibits significant advantages in terms of capacity and is considered the most promising negative electrode active substance. However, the silicon-based material undergoes significant volume swelling and contraction during charging and discharging, resulting in fast decay of electrode capacity and poor battery cycling performance. Therefore, the development of a negative electrode with excellent performance is a key way to improve the performance of lithium-ion batteries.

The negative electrode includes a negative electrode active substance that participates in an electrochemical reaction and auxiliary materials that do not participate in the electrochemical reaction, such as a current collector, a conductive agent, and a binder. The electrochemical performance of a battery is related not only to the type and properties of an active substance but also to the performance of the inactive materials such as a binder. At present, conventional binders commonly used in negative electrodes include SBR (styrene-butadiene copolymer and modified copolymers thereof) binders and PAA (copolymers of acrylic acid and its derivatives) binders. SBR binders are usually used in combination with carboxymethyl cellulose (CMC), and as SBR itself exhibits low mechanical strength, poor adhesive strength, and insufficient inhibition effect on electrode sheet swelling, the silicon negative electrode using an SBR binder exhibits significant cycling performance issues.

Compared with SBR binders, PAA binders have the advantages of low dosage, strong ability to inhibit swelling, and good cycling performance and thus are increasingly widely used in negative electrodes of lithium-ion batteries. For example, CN105633411A discloses a composite binder suitable for a silicon-based negative electrode material of a lithium-ion battery, which comprises a primary binder and a supplementary binder, where the primary binder is partially neutralized polyacrylic acid, the supplementary binder is styrene-butadiene rubber, and the mass ratio of the primary binder in the composite binder is 50% or more; the composite binder has good dispersibility and mechanical properties and helps to improve the electrochemical performance of the silicon-based negative electrode material. CN109037689A discloses a polymer binder of a lithium-ion silicon-based negative electrode material. The polymer binder is mainly composed of polyacrylic acid, and a styrene-acrylate copolymer is added at a weight ratio of 2%-10%. The polymer binder will form a gel structure in the process of preparing a negative electrode, and can form an integral structure with a conductive agent and silicon powders, thereby improving the performance of the negative electrode. CN111139002A discloses a water-soluble binder for a lithium-ion battery. The water-soluble binder is a water-soluble emulsion containing a multicomponent copolymer formed by 5%-75% of a monomer CHR₁₁=CHR₁₂-CN of formula 1, 1%-35% of a monomer CHR₂₁=CHR₂₂-CONR₂₃R₂₄ of formula 2, and 5%-65% of a monomer CHR₃₁=COOR₃₂ of formula 3, and can provide good adhesion.

Although the performance of the PAA binders described above is improved compared with SBR binders, the problems of insufficient flexibility, binding strength, and processability still exist in the preparation of negative electrodes. Moreover, PAA binders commonly used in the industry are all aqueous solution systems. In order to maintain good suspension and dispersion capability and adhesive strength, the molecular weight of the polymer is often very high, so the solid content of the PAA aqueous solution is often relatively low. Commercially available PAA binders typically have a solid content ranging from 5% to 15% by mass, and a relatively low solid content of the glue solution leads to a great increase in the transportation costs and packaging costs of the PAA binders. At the same time, since the aqueous solution polymerization system fails to effectively remove unreacted monomers and low molecular weight polymer fractions, there is still considerable need for improvement in both adhesive strength and swelling inhibition capabilities. Therefore, it is an urgent problem to be solved in the art to develop a binder exhibiting a high adhesive strength and capable of effectively inhibiting swelling, coupled with reduced transportation and packaging costs.

Furthermore, most of the existing solid binders comprise a high proportion of hydrophobic monomers and are water-insoluble, which limits their application in the field of aqueous negative electrode binders. Therefore, there is an urgent need to develop a solid binder that can solve the above technical problems and is water-soluble.

### SUMMARY

The following is a summary of the subject matters in detail, which, however, is not intended to limit the claimed scope.

The present application provides a water-soluble binder, a battery electrode sheet, and use thereof. The water-soluble binder exhibits improved adhesive strength and flexibility, effectively suppresses swelling of an active substance, and enhances the cycling performance of a lithium-ion battery.

In a first aspect, the present application provides a water-soluble binder. The water-soluble binder comprises a copolymer, wherein polymerization monomers of the copolymer comprise a combination of a double-bond-containing nitrile monomer, a double-bond-containing amide monomer, a double-bond-containing carboxylic acid monomer, optionally a double-bond-containing sulfonic acid monomer, and optionally a fifth monomer; wherein the water-soluble binder is in powder form, and wherein a mass percentage of the copolymer in the water-soluble binder is at least 92%.

In the present application, the water-soluble binder comprises a multicomponent copolymer formed by the polymerization of specific monomers. As a powder (solid) material, the water-soluble binder on one hand significantly reduces the transportation costs and packaging costs of polyacrylic acid (PAA) binders; on the other hand, during the process of forming the powder, unreacted monomers and low molecular weight polymer fractions are removed, resulting in a copolymer with higher molecular weight and a controlled molecular weight distribution. Therefore, compared with the solution-based PAA binders in the related art, the water-soluble binder simultaneously achieves a balance among adhesion, water solubility, and dispersibility of the copolymer and exhibits significantly improved adhesive strength and swelling inhibition capability. Based on the design of polymerization monomers and copolymer, combined with its powder form, the water-soluble binder not only exhibits good dispersibility and slurry stability, but also demonstrates excellent adhesive strength. Compared with solution-based binders in the related art, the binder of the present disclosure exhibits at least a 20% improvement in adhesive strength while requiring a reduction in dosage of more than 20%. This superior performance is achieved with a lower amount of binder, effectively inhibiting the volume swelling of active substances during charge-discharge cycles, and thereby improving the cycling performance of the electrode sheets and the lithium-ion batteries.

The following are preferred embodiments of the present application, but are not intended to limit the technical solutions provided in the present application. The objectives and beneficial effects of the present application can be better achieved and realized through the following preferred embodiments.

In the present application, the mass percentage of the copolymer in the water-soluble binder is at least 92%, which may be, for example, 93%, 94%, 95%, 96%, 97%, 98%, 99%, or 100%, as well as all specific values and subranges between the aforementioned points. Due to the limited space and for the sake of brevity, specific point values included in those ranges will not be exhaustively listed in the present application.

Preferably, the solid content of the water-soluble binder is at least 92%, which may be, for example, 93%, 94%, 95%, 96%, 97%, 98%, 99%, or 100%, as well as all specific values and subranges between the aforementioned points. Due to the limited space and for the sake of brevity, specific point values included in those ranges will not be exhaustively listed in the present application.

Preferably, the mass percentage of water in the water-soluble binder is ≤ 8%, which may be, for example, 0, 0.5%, 1%, 2%, 3%, 4%, 5%, 6%, 7%, or 8%, as well as all specific values and subranges between the aforementioned points. Due to the limited space and for the sake of brevity, specific point values included in those ranges will not be exhaustively listed in the present application. By controlling the water content to be ≤ 8%, the binder can be provided with enhanced water-solubility, enabling it to dissolve more rapidly in water during the electrode sheet preparation, thereby improving the process efficiency.

In a further preferred embodiment of the present application, the water-soluble binder consists of a copolymer and water, without any other additives included, wherein the copolymer is present in a mass percentage of at least 92%, and water is present in a mass percentage of ≤ 8%, based on the total mass of the binder.

Preferably, the water-soluble binder has a D₅₀ particle size ranging from 1 µm to 100 µm, which may be, for example, 5 µm, 10 µm, 15 µm, 20 µm, 25 µm, 30 µm, 35 µm, 40 µm, 45 µm, 50 µm, 55 µm, 60 µm, 70 µm, 80 µm, or 90 µm, as well as all specific values and subranges between the aforementioned points. Due to the limited space and for the sake of brevity, specific point values included in those ranges will not be exhaustively listed in the present application. The binder within said particle size range exhibits enhanced dissolution characteristics. Furthermore, it is preferable that the water-soluble binder has a D₅₀ particle size ranging from 10 µm to 80 µm.

Preferably, the water-soluble binder is formulated into a first aqueous solution having a solid content of 1.0% by mass. The first aqueous solution has a viscosity ranging from 200 cps to 20,000 cps at 25.0±0.1 °C, which may be, for example, 500 cps, 800 cps, 1000 cps, 3000 cps, 5000 cps, 8000 cps, 10,000 cps, 12,000 cps, 15,000 cps, or 18,000 cps, as well as all specific values and subranges between the aforementioned points. Due to the limited space and for the sake of brevity, specific point values included in those ranges will not be exhaustively listed in the present application.

In a further preferred embodiment of the present application, the first aqueous solution has a viscosity ranging from 500 cps to 10,000 cps at 25.0±0.1 °C.

Preferably, the first aqueous solution has a light transmittance of at least 85%. In some preferred embodiments of the present application, the first aqueous solution has a light transmittance of at least 90%. In some other preferred embodiments of the present application, the first aqueous solution has a light transmittance of at least 92%.

It is generally recognized in the art that an aqueous solution having a light transmittance of at least 85% may be considered indicative of a water-soluble binder. The water-soluble binder provided herein exhibits excellent water solubility. When formulated as a first aqueous solution having a solid content of 1.0% by mass, the solution demonstrates a light transmittance of at least 90%, which may range from 92% to 98%. Preferably, the water-soluble binder is formulated into a second aqueous solution having a solid content of 0.5% by mass, and the second aqueous solution has a pH value ranging from 6.0 to 9.0, which may be, for example, 6.2, 6.5, 6.8, 7.0, 7.2, 7.5, 7.8, 8.0, 8.2, 8.5, or 8.8, as well as all specific values and subranges between the aforementioned points. Due to the limited space and for the sake of brevity, specific point values included in those ranges will not be exhaustively listed in the present application.

Preferably, the copolymer has a weight-average molecular weight ranging from 200,000 to 3,000,000; which may be, for example: 250,000; 300,000; 350,000; 400,000; 450,000; 500,000; 550,000; 650,000; 700,000; 750,000; 800,000; 850,000; 900,000; 950,000; 1,000,000; 1,050,000; 1,100,000; 1,150,000; 1,200,000; 1,250,000; 1,300,000; 1,350,000; 1,400,000; 1,450,000; 1,500,000; 1,550,000; 1,600,000; 1,650,000; 1,700,000; 1,750,000; 1,800,000; 1,850,000; 1,900,000; 1,950,000; 2,000,000; 2,050,000; 2,100,000; 2,150,000; 2,200,000; 2,250,000; 2,300,000; 2,350,000; 2,400,000; 2,450,000; 2,500,000; 2,550,000; 2,600,000; 2,650,000; 2,700,000; 2,750,000; 2,800,000; 2,850,000; 2,900,000; or 2,950,000; as well as all specific values and subranges between the aforementioned points. Due to the limited space and for the sake of brevity, specific point values included in those ranges will not be exhaustively listed in the present application. In some preferred embodiments of the present application, the copolymer has a weight-average molecular weight ranging from 600,000 to 2,000,000. In some other preferred embodiments of the present application, the copolymer has a weight-average molecular weight ranging from 600,000 to 1,500,000. In yet some other preferred embodiments of the present application, the copolymer has a weight-average molecular weight ranging from 200,000 to 2,000,000. In further preferred embodiments of the present application, the copolymer has a weight-average molecular weight ranging from 500,000 to 3,000,000. In still other preferred embodiments of the present application, the copolymer has a weight-average molecular weight ranging from 200,000 to 2,500,000.

Preferably, the copolymer has a molecular weight distribution (Mw/Mn) ranging from 2 to 8, which may be, for example, 2.2, 2.5, 2.8, 3, 3.2, 3.5, 3.8, 4, 4.2, 4.5, 4.8, 5, 5.2, 5.5, 5.8, 6, 6.2, 6.5, 6.8, 7, 7.2, 7.5, or 8, as well as all specific values and subranges between the aforementioned points. Due to the limited space and for the sake of brevity, specific point values included in those ranges will not be exhaustively listed in the present application. In the present application, by controlling the molecular weight distribution of the copolymer within the range of 2 to 8, the present application achieves a balance between the adhesive properties, water solubility, and dispersibility of the copolymer. Specifically, the high-molecular-weight fraction contributes to enhanced adhesive strength, while the presence of minor medium and low molecular weight fractions improves water solubility and further enhances the dispersibility of graphite. In some preferred embodiments of the present application, the copolymer has a molecular weight distribution ranging from 2 to 6.

In a preferred embodiment of the present application, the copolymer has a weight-average molecular weight (Mw) ranging from 200,000 to 3,000,000, and a molecular weight distribution ranging from 2 to 8. By optimizing both the molecular weight and molecular weight distribution of the copolymer, the water-soluble binder provided herein achieves excellent technical effects in terms of adhesiveness, dispersibility, water solubility, volume swelling inhibition, and the like.

Specifically, the double-bond-containing nitrile monomer has a structure represented by formula I, the double-bond-containing amide monomer has a structure represented by formula II, the double-bond-containing carboxylic acid monomer has a structure represented by formula III, and the double-bond-containing sulfonic acid monomer has a structure represented by formula IV: 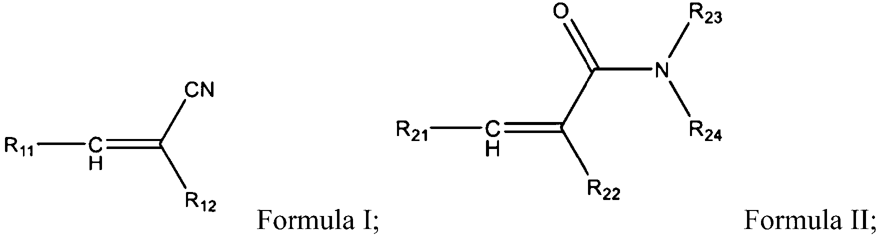 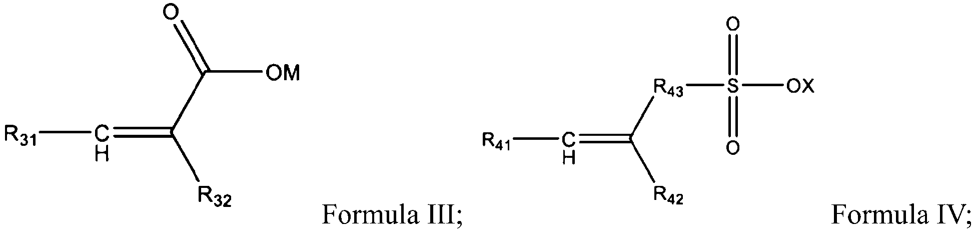
wherein R₁₁ is selected from any one of H, Cl, Br, and methyl;
R₁₂ is selected from any one of H, Cl, Br, and C1-C6 (e.g., C1, C2, C3, C4, C5, or C6) linear or branched alkyl;
R₂₁ and R₃₁ are each independently selected from H and methyl.
R₂₂ and R₃₂ are each independently selected from any one of H, C1-C20 (e.g., C1, C2, C3, C4, C5, C6, C8, C10, C12, C15, or C18) linear or branched alkyl, and phenyl;
R₂₃ and R₂₄ are each independently selected from any one of H, substituted or unsubstituted C1-C20 (e.g., C1, C2, C3, C4, C5, C6, C8, C10, C12, C15, or C18) linear or branched alkyl, and substituted or unsubstituted phenyl; the substituent for the substitution is selected from at least one of C1-C6 (e.g., C1, C2, C3, C4, C5, or C6) linear or branched alkyl, phenyl, a sulfonic acid group, and a sulfonate group;
M is selected from any one of H, Li, Na, and K;
R₄₁ is selected from H and methyl;
R₄₂ is selected from any one of H, C1-C6 (e.g., C1, C2, C3, C4, C5, or C6) linear or branched alkyl, and phenyl;
R₄₃ is selected from any one of C1-C6 (e.g., C1, C2, C3, C4, C5, or C6) linear or branched alkylene and phenylene;
X is selected from any one of H, Li, Na, and K.

In the present application, the term "C1-C20 linear or branched alkyl", preferably C1-C16 linear or branched alkyl, further preferably C1-C10 linear or branched alkyl, and still further preferably C1-C6 linear or branched alkyl, includes but is not limited to: methyl, ethyl, n-propyl, isopropyl, n-butyl, isobutyl, tert-butyl, 2-methylbutyl, n-pentyl, isopentyl, neopentyl, n-hexyl, neohexyl, 2-ethylhexyl, n-octyl, n-heptyl, n-nonyl, n-decyl, and the like.

Preferably, in formula I, R₁₁ is H.

Preferably, in formula I, R₁₂ is selected from H and methyl.

Preferably, the double-bond-containing nitrile monomer includes acrylonitrile and/or methacrylonitrile.

Preferably, based on the total mass of the monomers for polymerization of the copolymer, the mass percentage of the double-bond-containing nitrile monomer ranges from 1% to 60%, which may be, for example, 2%, 5%, 10%, 15%, 20%, 25%, 30%, 35%, 40%, 45%, 50% or 55%, as well as all specific values and subranges between the aforementioned points. Due to the limited space and for the sake of brevity, specific point values included in those ranges will not be exhaustively listed in the present application. The mass percentage further preferably ranges from 20% to 55% and still further preferably ranges from 30% to 55%.

Preferably, in formula II, R₂₁ is H.

Preferably, in formula II, R₂₂ is selected from H and methyl.

Preferably, in formula II, R₂₃ and R₂₄ are each independently selected from any one of H and substituted or unsubstituted C1-C6 linear or branched alkyl.

Preferably, the substituent for the substitution in R₂₃ and R₂₄ is selected from at least one of C1-C3 linear or branched alkyl, phenyl, and a sulfonic acid group.

Preferably, the double-bond-containing amide monomer is selected from the group consisting of acrylamide, methacrylamide, N,N-diethylacrylamide, *N,N-*diethylmethacrylamide, N-ethylacrylamide, N-ethylmethacrylamide, *N,N-*dimethacrylamide, N,N-dimethylmethacrylamide, N-methacrylamide, *N-*methylmethacrylamide, N-isopropylacrylamide, N-isopropylmethacrylamide, 2-acrylamide-2-phenylethanesulfonic acid, and combinations thereof.

Preferably, based on the total mass of the monomers for polymerization of the copolymer, the mass percentage of the double-bond-containing amide monomer ranges from 1% to 40%, which may be, for example, 2%, 5%, 8%, 10%, 12%, 15%, 18%, 20%, 22%, 25%, 28%, 30%, 32%, 35%, or 38%, as well as all specific values and subranges between the aforementioned points. Due to the limited space and for the sake of brevity, specific point values included in those ranges will not be exhaustively listed in the present application. The mass percentage further preferably ranges from 5% to 30% and still further preferably ranges from 5% to 20%.

Preferably, the double-bond-containing carboxylic acid monomer is selected from the group consisting of acrylic acid, methacrylic acid, sodium acrylate, sodium methacrylate, lithium acrylate, lithium methacrylate, and combinations thereof.

Preferably, based on the total mass of the monomers for polymerization of the copolymer, the mass percentage of the double-bond-containing carboxylic acid monomer ranges from 5% to 95%, which may be, for example, 10%, 15%, 20%, 25%, 35%, 40%, 45%, 50%, 55%, 60%, 65%, 70%, 75%, 80%, 85%, or 90%, as well as all specific values and subranges between the aforementioned points. Due to the limited space and for the sake of brevity, specific point values included in those ranges will not be exhaustively listed in the present application. The mass percentage further preferably ranges from 20% to 65% and still further preferably ranges from 30% to 60%.

Preferably, in formula IV, R₄₁ is H.

Preferably, in formula IV, R₄₂ is selected from H and methyl.

Preferably, in formula IV, R₄₃ is methylene.

Preferably, the double-bond-containing sulfonic acid monomer is selected from the group consisting of methacryl sulfonic acid, acryl sulfonic acid, sodium methacryl sulfonate, sodium acryl sulfonate, lithium methacryl sulfonate, lithium acryl sulfonate, and combinations thereof.

Preferably, based on the total mass of the monomers for polymerization of the copolymer, the mass percentage of the double-bond-containing sulfonic acid monomer ranges from 0 to 15%, which may be, for example, 0, 1%, 2%, 3%, 4%, 5%, 6%, 7%, 8%, 9%, 10%, 11%, 12%, 13%, or 14%, as well as all specific values and subranges between the aforementioned points. Due to the limited space and for the sake of brevity, specific point values included in those ranges will not be exhaustively listed in the present application. The mass percentage further preferably ranges from 0 to 10%.

Preferably, the fifth monomer includes a double-bond-containing ester monomer and/or a double-bond-containing ether monomer.

Preferably, the fifth monomer is selected from the group consisting of ethyl acrylate, hydroxyethyl acrylate, butyl acrylate, hydroxybutyl acrylate, lauryl acrylate, stearyl acrylate, ethyl methacrylate, hydroxyethyl methacrylate, butyl methacrylate, hydroxybutyl methacrylate, lauryl methacrylate, stearyl methacrylate, alkyl polyoxyethylene ether acrylate, alkyl polyoxyethylene ether methacrylate, diethylene glycol vinyl ether, triethylene glycol vinyl ether, polyethylene glycol vinyl ether, and combinations thereof.

Preferably, based on the total mass of the monomers for polymerization of the copolymer, the mass percentage of the fifth monomer ranges from 0 to 20%, which may be, for example, 0, 1%, 2%, 3%, 4%, 5%, 6%, 7%, 8%, 9%, 10%, 11%, 12%, 13%, 14%, 15%, 16%, 17%, 18%, or 19%, as well as all specific values and subranges between the aforementioned points. Due to the limited space and for the sake of brevity, specific point values included in those ranges will not be exhaustively listed in the present application. The mass percentage further preferably ranges from 0 to 15% and still further preferably ranges from 0 to 10%.

Illustratively, a method for preparing the water-soluble binder provided in the present application comprises: subjecting polymerization monomers to a polymerization reaction in the presence of an initiator and a solvent, and post-treating and drying the resulting polymerization product to obtain the water-soluble binder in powder form.

Preferably, the initiator is selected from the group consisting of an organic peroxide, an inorganic peroxide, a redox initiator, and combinations thereof.

Preferably, the initiator is selected from the group consisting of benzoyl peroxide, dicumyl peroxide, 2,5-dimethyl-2,5-bis(tert-butylperoxy)hexane, tert-butyl peroxide, and combinations thereof.

Preferably, based on 100 parts by mass of the polymerization monomers, the mass of the initiator is 0.01-2 parts, which may be, for example, 0.03 parts, 0.05 parts, 0.08 parts, 0.1 parts, 0.3 parts, 0.5 parts, 0.8 parts, 1 part, 1.2 parts, 1.5 parts, or 1.8 parts, as well as all specific values and subranges between the aforementioned points. Due to the limited space and for the sake of brevity, specific point values included in those ranges will not be exhaustively listed in the present application.

Preferably, the solvent may be an organic solvent or water, or a composition of the two. The organic solvent includes, but is not limited to, methanol, ethanol, acetonitrile, N-methylpyrrolidone (NMP), and the like. When the solvent is a composition of an organic solvent and water, the two may be mixed in any mass ratio, for example, may be mixed in a mass ratio range of 1:99 to 99:1, which is selected based on actual needs. Preferably, based on 100 parts of the mass of the polymerization monomers, the mass of the solvent is 100-500 parts, which may be, for example, 150 parts, 200 parts, 250 parts, 300 parts, 350 parts, 400 parts, or 450 parts, as well as all specific values and subranges between the aforementioned points. Due to the limited space and for the sake of brevity, specific point values included in those ranges will not be exhaustively listed in the present application.

Preferably, the polymerization reaction is performed in a protective atmosphere.

Preferably, the protective atmosphere includes nitrogen.

Preferably, the temperature of the polymerization reaction is 50-90 °C, which may be, for example, 52 °C, 55 °C, 58 °C, 60 °C, 62 °C, 65 °C, 68 °C, 70 °C, 72 °C, 78 °C, 82 °C, 85 °C, or 88 °C, as well as all specific values and subranges between the aforementioned points. Due to the limited space and for the sake of brevity, specific point values included in those ranges will not be exhaustively listed in the present application.

Preferably, the time of the polymerization reaction is 2-24 h, which may be, for example, 3 h, 4 h, 5 h, 6 h, 7 h, 8 h, 9 h, 10 h, 12 h, 15 h, 16 h, 18 h, 20 h, or 22 h, as well as all specific values and subranges between the aforementioned points. Due to the limited space and for the sake of brevity, specific point values included in those ranges will not be exhaustively listed in the present application.

Preferably, the post-treatment comprises removal of a residual monomer, adjustment of pH, and solid-liquid separation in sequence.

Preferably, the method for removing the residual monomer includes pressure reduction, and the vacuum degree of the pressure reduction (vacuumizing) is ≤ 0.1 MPa, which may be, for example, 0, 0.01 MPa, 0.02 MPa, 0.03 MPa, 0.04 MPa, 0.05 MPa, 0.06 MPa, 0.07 MPa, 0.08 MPa, or 0.09 MPa, as well as all specific values and subranges between the aforementioned points. Due to the limited space and for the sake of brevity, specific point values included in those ranges will not be exhaustively listed in the present application.

Preferably, the reagent for adjusting the pH is selected from the group consisting of an aqueous sodium hydroxide solution, an aqueous lithium hydroxide solution, an aqueous potassium hydroxide solution, and combinations thereof.

Preferably, the temperature for adjusting the pH is 30-70 °C, which may be, for example, 32 °C, 35 °C, 38 °C, 40 °C, 42 °C, 45 °C, 48 °C, 50 °C, 52 °C, 55 °C, 58 °C, 60 °C, 62 °C, 65 °C, or 68 °C, as well as all specific values and subranges between the aforementioned points. Due to the limited space and for the sake of brevity, specific point values included in those ranges will not be exhaustively listed in the present application. More preferably, the temperature is from 40-60 °C.

Preferably, the pH is adjusted to a value in the range of 6.0-9.0, which may be, for example, 6.2, 6.5, 6.8, 7.0, 7.2, 7.5, 7.8, 8.0, 8.2, 8.5, or 8.8, as well as all specific values and subranges between the aforementioned points. Due to the limited space and for the sake of brevity, specific point values included in those ranges will not be exhaustively listed in the present application. More preferably, the pH is adjusted to a value in the range of 7.0-8.5.

Preferably, the method for solid-liquid separation includes solid filter pressing.

Preferably, a step of pulverizing and sieving is also performed after the drying.

Preferably, the preparation method comprises:
mixing the polymerization monomers, the initiator, and the solvent, and performing a polymerization reaction in a protective atmosphere at 50-90 °C for 2-24 h to obtain a polymerization product; and
vacuumizing the polymerization product to ≤ 0.1 MPa to remove a residual monomer, then adjusting a pH value of the system to 7.0-8.5, and performing solid-liquid separation, drying, pulverizing, and sieving to obtain the water-soluble binder in powder form.

In order to further improve the dispersion and wetting properties of the powder binder prepared above, 0.01%-5% by mass of a wetting dispersant may be added to the water-soluble binder in powder form.

Preferably, the wetting dispersant may be selected from the group consisting of polycarboxylic acids, modified polycarboxylic acids, polyethers, modified polyethers, and combinations thereof.

In a second aspect, the present application provides an electrode material composition. The electrode material composition comprises the water-soluble binder according to the first aspect.

Preferably, the electrode material composition comprises a combination of an active substance, a conductive agent, and the water-soluble binder.

Preferably, the mass percentage of the water-soluble binder in the electrode material composition ranges from 0.3% to 3%, which may be, for example, 0.4%, 0.5%, 0.7%, 0.8%, 1%, 1.2%, 1.5%, 1.8%, 2.0%, 2.3%, 2.5%, 2.8%, or 3.0%, as well as all specific values and subranges between the aforementioned points. Due to the limited space and for the sake of brevity, specific point values included in those ranges will not be exhaustively listed in the present application.

It should be noted that the mass of the electrode material composition is the sum of the mass of the active substance, the mass of the conductive agent, and the mass of the water-soluble binder, and the mass of the water-soluble binder is calculated based on solid content.

Preferably, the electrode material composition is a negative electrode material composition, and the active substance is a negative electrode active substance.

Preferably, the negative electrode active substance comprises a carbon-based material and/or a silicon-based material.

Preferably, the carbon-based material is selected from the group consisting of graphite, carbon black, a carbon nanotube, a carbon fiber, a mesocarbon microbead, petroleum coke, and combinations thereof.

Preferably, the silicon-based material is selected from the group consisting of nano-silicon, micro-silicon, porous silicon, amorphous silicon, silicon oxide, and combinations thereof.

Preferably, based on 100 parts by mass of the negative electrode active substance, the mass of the conductive agent is 0.1-5.0 parts, which may be, for example, 0.1 parts, 0.3 parts, 0.5 parts, 0.7 parts, 0.9 parts, 1.0 part, 1.2 parts, 1.5 parts, 1.8 parts, 2.0 parts, 2.2 parts, 2.5 parts, 2.8 parts, 3.0 parts, 3.2 parts, 3.5 parts, 3.8 parts, 4.0 parts, 4.2 parts, 4.5 parts, or 4.8 parts, as well as all specific values and subranges between the aforementioned points. Due to the limited space and for the sake of brevity, specific point values included in those ranges will not be exhaustively listed in the present application.

In a third aspect, the present application provides a battery electrode sheet. The battery electrode sheet comprises a current collector and a coating layer disposed on the current collector, and the coating layer comprises the electrode material composition according to the second aspect.

Preferably, the battery electrode sheet is a negative electrode sheet.

In a preferred embodiment of the present application, the peel strength of the negative electrode sheet is at least 17.8 N/mm, and may be 17.8-20.14 N/mm.

In a preferred embodiment of the present application, the water-soluble binder has excellent adhesive strength and flexibility and can inhibit volume swelling, so that the full-charge swelling of the negative electrode sheet containing the water-soluble binder is ≤ 25.3%, which may be 24.65%-25.23%, and the capacity retention rate of the lithium-ion battery containing the water-soluble binder after 500 cycles at 60 °C is at least 86.5%, which may be 86.87%-88.25%.

In a fourth aspect, the present application provides an electrochemical energy storage device. The electrochemical energy storage device includes at least one of the water-soluble binder according to the first aspect, the electrode material composition according to the second aspect, or the battery electrode sheet according to the third aspect.

Preferably, the electrochemical energy storage device is selected from the group consisting of a lithium-ion battery, a sodium-ion battery, a supercapacitor, a fuel cell, and a solar cell, and is further preferably a lithium-ion battery.

Compared with the related art, the present application has the following beneficial effects.

The water-soluble powder binder provided by the present application includes a multicomponent copolymer formed by the polymerization of specific types of monomers. As a powder material, the water-soluble powder binder not only greatly reduces the transportation costs and packaging costs of PAA binders, but also has unreacted monomers and low molecular weight polymer fractions removed in the process of forming the powder, so that the water-soluble binder in powder form exhibits significantly improved adhesive strength and swelling inhibition capability compared with the solution-based PAA binders in the related art. Based on the design of polymerization monomers and copolymers combined with powder morphology, the water-soluble binder exhibits excellent adhesive strength. Compared with existing solution-based binders, its adhesive strength is increased by at least ≥ 20%, and its addition amount is reduced by at least 20%. The water-soluble binder can effectively inhibit the volume swelling of electrode sheets during charge-discharge cycles, thereby improving the cycling performance of electrode sheets and lithium-ion batteries. In another aspect, compared with a glue solution product, the powder product can be tightly pressed to the graphite surface more easily during kneading, resulting in a denser coating effect, thereby improving the processability and further improving the electrical performance.

Other aspects will be apparent upon reading and understanding the detailed description.

### DETAILED DESCRIPTION

The technical solutions of the present application are further illustrated with reference to the following specific examples. It will be appreciated by those skilled in the art that the examples are only intended to help understand the present invention and should not be construed as specific limitations to the present application.

As used herein, the terms "comprise", "include", "have", and "contain", or any variations thereof, are intended to encompass a non-exclusive inclusion. For example, a composition, procedure, method, article, or apparatus that includes listed elements is not necessarily limited to such elements only, but may include other elements not explicitly listed or inherent to such a composition, procedure, method, article, or apparatus.

The "optional" or "anyone" means that the subsequently described event may or may not occur, and that the description includes instances where the event occurs and instances where it does not.

The indefinite articles "a" and "an" preceding an element or component of the present application are used without limitation to the number (i.e., the number of occurrences) of the element or component. Thus, "a" or "an" should be interpreted to include one or at least one, and the singular form of an element or component also includes the plural form unless the singular form is clearly indicated.

The term "an embodiment", "some embodiments", "illustratively", "a specific example", or "some examples" used herein means that a specific feature, structure, material, or characteristic described in connection with the embodiment or example is included in at least one embodiment or example of the present application. As used herein, the schematic descriptions of the terms described above do not necessarily refer to the same embodiment or example.

In addition, the technical features according to the embodiments of the present application may be combined with each other as long as they do not conflict with each other.

In the following specific examples of the present application, the polymerization monomer, initiator, solvent, and the like used are all commercially available products. Test methods involved in the following specific examples of the present application are as follows.
(1) Solid content of the water-soluble binder:
   2-3 g of the powdered binder or glue solution to be tested was placed in a blast oven at 120 °C and baked for 2 h. The masses before and after baking were recorded as m₀ and m₁, respectively, and the solid content = m₁/m₀ × 100%.
(2) D₅₀ particle size of the water-soluble binder:
   The laser particle size analyzer with the model of RODOT T4.1+VIBRI was used for testing.
(3) Weight average molecular weight and molecular weight distribution of the water-soluble binder:
   The weight-average molecular weight Mw and the molecular weight distribution of the water-soluble binder (copolymer) were tested by gel permeation chromatography (GPC).
   The specific test conditions are as follows: analytical instrument: Agilent 1260 Infinity II; mobile phase: 0.1 mol/L aqueous NaNO₃ solution; chromatographic column: waters ultrastyragel 1000 and waters ultrastyragel 120 in series; detector: Agilent 1260 RID; standard: PEG; flow rate: 0.8 mL/min; column temperature: 40 °C; detector temperature: 40 °C.
(4) Viscosity of aqueous solution of the water-soluble binder:
   Deionized water was added to dissolve the powdered binder to a required solid content. After the confirmation that the powder was fully dissolved, the solution was maintained at a constant temperature of 25 °C, and an NDJ-5S digital rotary viscometer was used to test the viscosity of the glue solution.
(5) Light transmittance of aqueous solution of the water-soluble binder:
   An ultraviolet spectrophotometer was used. 10 g of the powdered binder was weighed out with an accuracy of 0.1 g and transferred to a 20 mL volumetric flask, and water was added to dilute to the mark. The mixture was stirred evenly and used as a test solution, which was maintained at a constant temperature of 25 °C. A 10 mm cuvette cleaned with pure water was used, and the test was performed at a wavelength of 430 nm. The light transmittance was calibrated to zero point with pure water for volumetric dilution, and then the light transmittance of the test solution was determined.
(6) pH value of aqueous solution of the water-soluble binder:
   A Mettler pH meter was used. Deionized water was added to dissolve the powdered binder until the solid content was 0.5% by mass, the mixture was fully stirred and dispersed until it was transparent to ensure that the sample was diluted and dispersed uniformly without agglomeration, and a pH meter was used to test the pH.

### Example 1

A water-soluble binder in powder form comprises a copolymer, wherein the copolymer is formed from polymerization monomers comprising, by mass: 55 parts of acrylic acid, 5 parts of *N,N-*diethylacrylamide, and 40 parts of acrylonitrile.

The method for preparing the water-soluble binder is as follows:
A mixed solvent of 350 parts of pure water and acetonitrile was added into a reaction vessel, and the mixture was stirred at 100 rpm. The polymerization monomers were added according to the amounts specified in the formula described above, nitrogen was continuously introduced, and the mixture was stirred for 3 h to obtain a solution. The temperature was raised to 80 °C, 0.5 parts of a benzoyl peroxide solution (mass fraction: 10%) were added into the solution described above, and the mixture was reacted at 80 °C for 10 h to obtain a polymerization product. The polymerization product was subjected to vacuumizing with a vacuum pump at 60 °C until the vacuum degree was less than 0.1 MPa to remove a residual monomer, and then neutralized at 50 °C to a pH of 7.5 with an aqueous lithium hydroxide solution, and then solid filter pressing, drying, pulverizing, and sieving were performed to obtain the water-soluble binder in powder form.

The water-soluble binder had a solid content of 92 wt% and a D₅₀ particle size of 50 µm.

The water-soluble binder (copolymer) had an Mw of 8.96 × 10⁵ and a molecular weight distribution of 2.72.

The water-soluble binder was dissolved in water to form an aqueous solution having a solid content of 1.0 wt% and having a viscosity of 1000 cps and a light transmittance of 98%.

The water-soluble binder was dissolved in water to form a 0.5 wt% aqueous solution having a pH of 7.5.

### Example 2

A water-soluble binder in powder form comprises a copolymer, wherein the copolymer is formed from polymerization monomers comprising, by mass: 30 parts of acrylic acid, 10 parts of *N,N*-diethylacrylamide, 55 parts of acrylonitrile, and 5 parts of sodium methacryl sulfonate. The method for preparing the water-soluble binder is as follows: A mixed solvent of 350 parts of pure water and acetonitrile was added into a reaction vessel, and the mixture was stirred at 100 rpm. The polymerization monomers were added according to the amounts specified in the formula described above, nitrogen was continuously introduced, and the mixture was stirred for 3 h to obtain a solution. The temperature was raised to 80 °C, 0.5 parts of a benzoyl peroxide solution (mass fraction: 10%) were added into the solution described above, and the mixture was reacted at 80 °C for 10 h to obtain a polymerization product. The polymerization product was subjected to vacuumizing with a vacuum pump at 60 °C until the vacuum degree was less than 0.1 MPa to remove a residual monomer, and then neutralized at 50 °C to a pH of 7.8 with an aqueous lithium hydroxide solution, and then solid filter pressing, drying, pulverizing, and sieving were performed to obtain the water-soluble binder in powder form.

The water-soluble binder had a solid content of 95 wt% and a D₅₀ particle size of 57 µm.

The water-soluble binder (copolymer) had an Mw of 9.24 × 10⁵ and a molecular weight distribution of 2.54.

The water-soluble binder was dissolved in water to form an aqueous solution having a solid content of 1.0 wt% and having a viscosity of 10,000 cps and a light transmittance of 92%.

The water-soluble binder was dissolved in water to form a 0.5 wt% aqueous solution having a pH of 7.7.

### Example 3

A water-soluble binder in powder form comprises a copolymer, wherein the copolymer is formed from polymerization monomers comprising, by mass: 35 parts of acrylic acid, 15 parts of N,N-diethylacrylamide, 40 parts of acrylonitrile, and 10 parts of sodium methacryl sulfonate. The method for preparing the water-soluble binder is as follows:
A mixed solvent of 350 parts of pure water and acetonitrile was added into a reaction vessel, and the mixture was stirred at 100 rpm. The polymerization monomers were added according to the amounts specified in the formula described above, nitrogen was continuously introduced, and the mixture was stirred for 3 h to obtain a solution. The temperature was raised to 80 °C, 0.5 parts of a benzoyl peroxide solution (mass fraction: 10%) were added into the solution described above, and the mixture was reacted at 80 °C for 10 h to obtain a polymerization product. The polymerization product was subjected to vacuumizing with a vacuum pump at 60 °C until the vacuum degree was less than 0.1 MPa to remove a residual monomer, and then neutralized at 50 °C to a pH of 7.4 with an aqueous lithium hydroxide solution, and then solid filter pressing, drying, pulverizing, and sieving were performed to obtain the water-soluble binder in powder form.

The water-soluble binder had a solid content of 94 wt% and a D₅₀ particle size of 63 µm.

The water-soluble binder (copolymer) had an Mw of 8.46 × 10⁵ and a molecular weight distribution of 2.83.

The water-soluble binder was dissolved in water to form an aqueous solution having a solid content of 1.0 wt% and having a viscosity of 4500 cps and a light transmittance of 95%.

The water-soluble binder was dissolved in water to form a 0.5 wt% aqueous solution having a pH of 7.3.

### Example 4

A water-soluble binder in powder form comprises a copolymer, wherein the copolymer is formed from polymerization monomers comprising, by mass: 60 parts of acrylic acid, 10 parts of N,N-diethylacrylamide, 20 parts of acrylonitrile, and 10 parts of sodium methacryl sulfonate. The method for preparing the water-soluble binder is as follows:
A mixed solvent of 350 parts of pure water and acetonitrile was added into a reaction vessel, and the mixture was stirred at 100 rpm. The polymerization monomers were added according to the amounts specified in the formula described above, nitrogen was continuously introduced, and the mixture was stirred for 3 h to obtain a solution. The temperature was raised to 80 °C, 0.5 parts of a benzoyl peroxide solution (mass fraction: 10%) were added into the solution described above, and the mixture was reacted at 80 °C for 10 h to obtain a polymerization product. The polymerization product was subjected to vacuumizing with a vacuum pump at 60 °C until the vacuum degree was less than 0.1 MPa to remove a residual monomer, and then neutralized at 50 °C to a pH of 7.5 with an aqueous lithium hydroxide solution, and then solid filter pressing, drying, pulverizing, and sieving were performed to obtain the water-soluble binder in powder form.

The water-soluble binder had a solid content of 94 wt% and a D₅₀ particle size of 60 µm.

The water-soluble binder (copolymer) had an Mw of 11.65 × 10⁵ and a molecular weight distribution of 3.46.

The water-soluble binder was dissolved in water to form an aqueous solution having a solid content of 1.0 wt% and having a viscosity of 550 cps and a light transmittance of 98%.

The water-soluble binder was dissolved in water to form a 0.5 wt% aqueous solution having a pH of 7.5.

### Example 5

A water-soluble binder in powder form comprises a copolymer, wherein the copolymer is formed from polymerization monomers comprising, by mass: 55 parts of acrylic acid, 5 parts of *N,N*-diethylacrylamide, and 40 parts of acrylonitrile. The method for preparing the water-soluble binder is as follows:
A mixed solvent of 450 parts of pure water and acetonitrile was added into a reaction vessel, and the mixture was stirred at 100 rpm. The polymerization monomers were added according to the amounts specified in the formula described above, nitrogen was continuously introduced, and the mixture was stirred for 3 h to obtain a solution. The temperature was raised to 80 °C, 0.7 parts of a benzoyl peroxide solution (mass fraction: 10%) were added into the solution described above, and the mixture was reacted at 80 °C for 8 h to obtain a polymerization product. The polymerization product was subjected to vacuumizing with a vacuum pump at 60 °C until the vacuum degree was less than 0.1 MPa to remove a residual monomer, and then neutralized at 50 °C to a pH of 7.7 with an aqueous lithium hydroxide solution, and then solid filter pressing, drying, pulverizing, and sieving were performed to obtain the water-soluble binder in powder form.

The water-soluble binder had a solid content of 95 wt% and a D₅₀ particle size of 65 µm.

The water-soluble binder (copolymer) had an Mw of 4.5 × 10⁵ and a molecular weight distribution of 4.38.

The water-soluble binder was dissolved in water to form an aqueous solution having a solid content of 1.0 wt% and having a viscosity of 550 cps and a light transmittance of 94%.

The water-soluble binder was dissolved in water to form a 0.5 wt% aqueous solution having a pH of 7.7.

### Example 6

A water-soluble binder in powder form comprises a copolymer, wherein the copolymer is formed from polymerization monomers comprising, by mass: 45 parts of acrylic acid, 10 parts of *N,N*-diethylacrylamide, 40 parts of acrylonitrile, and 5 parts of butyl acrylate. The method for preparing the water-soluble binder is as follows:
A mixed solvent of 350 parts of pure water and acetonitrile was added into a reaction vessel, and the mixture was stirred at 100 rpm. The polymerization monomers were added according to the amounts specified in the formula described above, nitrogen was continuously introduced, and the mixture was stirred for 3 h to obtain a solution. The temperature was raised to 75 °C, 0.5 parts of a benzoyl peroxide solution (mass fraction: 10%) were added into the solution described above, and the mixture was reacted at 75 °C for 12 h to obtain a polymerization product. The polymerization product was subjected to vacuumizing with a vacuum pump at 60 °C until the vacuum degree was less than 0.1 MPa to remove a residual monomer, and then neutralized at 50 °C to a pH of 7.7 with an aqueous lithium hydroxide solution, and then solid filter pressing, drying, pulverizing, and sieving were performed to obtain the water-soluble binder in powder form.

The water-soluble binder had a solid content of 93 wt% and a D₅₀ particle size of 57 µm.

The water-soluble binder (copolymer) had an Mw of 12.86 × 10⁵ and a molecular weight distribution of 4.79.

The water-soluble binder was dissolved in water to form an aqueous solution having a solid content of 1.0 wt% and having a viscosity of 7000 cps and a light transmittance of 94%.

The water-soluble binder was dissolved in water to form a 0.5 wt% aqueous solution having a pH of 7.7.

### Example 7

A water-soluble binder in powder form comprises a copolymer, wherein the copolymer is formed from polymerization monomers comprising, by mass: 40 parts of acrylic acid, 10 parts of *N,N-*diethylacrylamide, 45 parts of acrylonitrile, and 5 parts of butyl acrylate. The method for preparing the water-soluble binder is as follows:
A mixed solvent of 350 parts of pure water and acetonitrile was added into a reaction vessel, and the mixture was stirred at 100 rpm. The polymerization monomers were added according to the amounts specified in the formula described above, nitrogen was continuously introduced, and the mixture was stirred for 3 h to obtain a solution. The temperature was raised to 72 °C, 0.3 parts of a benzoyl peroxide solution (mass fraction: 10%) were added into the solution described above, and the mixture was reacted at 72 °C for 12 h to obtain a polymerization product. The polymerization product was subjected to vacuumizing with a vacuum pump at 60 °C until the vacuum degree was less than 0.1 MPa to remove a residual monomer, and then neutralized at 50 °C to a pH of 7.5 with an aqueous lithium hydroxide solution, and then solid filter pressing, drying, pulverizing, and sieving were performed to obtain the water-soluble binder in powder form.

The water-soluble binder had a solid content of 95 wt% and a D₅₀ particle size of 50 µm.

The water-soluble binder (copolymer) had an Mw of 19.88 × 10⁵ and a molecular weight distribution of 5.33.

The water-soluble binder was dissolved in water to form an aqueous solution having a solid content of 1.0 wt% and having a viscosity of 10,000 cps and a light transmittance of 93%.

The water-soluble binder was dissolved in water to form a 0.5 wt% aqueous solution having a pH of 7.5.

### Comparative Example 1

A binder, which is formed by combining commercially available styrene-butadiene rubber SBR with sodium carboxymethyl cellulose CMC in a mass ratio of 1:1.

### Comparative Example 2

A binder, which is a commercially available acrylic resin PAA binder and is a solution-based binder.

### Comparative Example 3

A water-soluble binder in a solution form, wherein the preparation method is as follows: 350 parts of pure water were added into a reaction vessel and stirred at 100 rpm, and then 55 parts of acrylic acid, 5 parts of *N,N-*diethylacrylamide, and 40 parts of acrylonitrile were added. Nitrogen was continuously introduced, and the mixture was stirred for 3 h to obtain a solution. The temperature was raised to 80 °C, 0.5 parts of a benzoyl peroxide solution (mass fraction: 10%) were added into the solution described above, and the mixture was reacted at 80 °C for 10 h to obtain a polymerization product. The polymerization product was subjected to vacuumizing with a vacuum pump at 60 °C until the vacuum degree was less than 0.1 MPa to remove a residual monomer, and then neutralized at 50 °C to a pH of 7.5 with an aqueous lithium hydroxide solution, and then water was added to adjust a solid content thereof to 5% by mass, thus obtaining the water-soluble binder.

The water-soluble binder had a solid content of 5 wt%, and when diluted into a 1% aqueous solution, it had a viscosity of 600 cps and a light transmittance of 94%.

The water-soluble binder (copolymer) had an Mw of 5.34 × 10⁵ and a molecular weight distribution of 3.67.

### Application Examples 1-7, Comparative Application Examples 1-3

A negative electrode sheet, which comprises a current collector (Cu foil) and a coating layer disposed on the current collector, wherein the material of the coating layer is a negative electrode material composition, and the negative electrode material composition comprises a negative electrode active substance (graphite), a conductive agent (conductive carbon black SP) and a binder, wherein the binder is the binder provided in Examples 1-7 and Comparative Examples 1-3.

Preparation of the negative electrode sheet: The negative electrode active substance, SP, and the binder of Examples 1-7 were mixed in a mass ratio of 97.0:1:2.0, and the mixture was added into pure water as per a final solid proportion of 50 wt% in the system. The mixture was fully stirred and mixed to obtain a homogenous negative slurry, which was applied to the negative electrode current collector Cu foil, followed by drying and pressing with a roller to obtain the negative electrode sheet.

For the binder of Comparative Examples 1-3, the negative electrode active substance, SP, and the binder of Comparative Examples 1-3 were mixed in a mass ratio of 96.5:1:2.5, and the mixture was added into pure water as per a final solid proportion of 50 wt% in the system. The mixture was fully stirred and mixed to obtain a homogenous negative slurry, which was applied to a negative electrode current collector Cu foil, followed by drying and pressing with a roller to obtain the negative electrode sheet.

A lithium-ion battery, which comprises a positive electrode sheet, a negative electrode sheet, a separator, and an electrolyte, wherein the negative electrode sheet is the negative electrode sheet described above. The preparation method of the lithium-ion battery is as follows:
(1) Preparation of positive electrode sheet: A positive electrode active substance (nickel-cobalt-manganese ternary material NCM622), a conductive agent (SP), and a binder (polyvinylidene fluoride, PVDF) were mixed in a mass ratio of 95.5:2.0:2.5, and the mixture was added into *N*-methylpyrrolidone NMP as per a final solid proportion of 50 wt% in the system. The mixture was fully stirred and mixed to obtain a homogenous positive electrode slurry, which was applied to a positive electrode current collector Al foil, followed by drying and pressing with a roller to obtain the positive electrode sheet.
(2) Preparation of negative electrode sheet: as described above.
(3) Separator: A PP porous polymer film was used.
(4) Assembly of lithium-ion battery: The positive electrode sheet, the separator, and the negative electrode sheet were wound in sequence to obtain a battery cell. The battery cell was packaged with an aluminum-plastic film and baked for water removal, and then an electrolyte (a LiPF₆ electrolyte, 1 mol/L, in which the solvent was a mixture of ethylene carbonate (EC), ethyl methyl carbonate (EMC), and diethyl carbonate (DEC) at a mass ratio of 3:2:5) was injected. Then, after vacuum sealing, standing, formation, secondary sealing, shaping, and other procedures, the lithium-ion battery was obtained. The performance of the negative electrode sheet and the lithium-ion battery was tested as follows:
   (1) Peel strength: The electrode sheets of the Examples and Comparative Examples were each cut into strips of 20 cm × 2.5 cm. The strip was bonded to a steel plate having a thickness of 1 mm at the current collector side with a double-sided tape, and a transparent tape was attached to the coating side. The coating layer was peeled off at a speed of 100 mm/min by a tensile tester at 180°, and the peel stress was measured.
   (2) Full-charge swelling: The lithium-ion battery was subjected to charge-discharge cycles at 0.5C in a voltage range of 2.5-4.2 V at 25 °C, and the initial coulombic efficiency of the charge-discharge cycles and the coulombic efficiency and the capacity retention rate after 50 cycles were measured by using a constant current method. After 50 charge-discharge cycles, the ratio of the increased thickness of the electrode sheet measured when the electrode sheet was fully lithiated to the thickness of the electrode sheet before charge and discharge was recorded as full-charge swelling.
   (3) Cycling performance: The lithium-ion battery was directly placed in an oven at 60 °C and subjected to charge-discharge cycles at 1C in a voltage range of 2.5-4.2 V, and the cycle capacity retention rate after 500 cycles was measured.

The test results are shown in Table 1:

**Table 1**

| Binder | Peel Strength (N/mm) | Full-charge swelling (%) | Cycle capacity retention rate (%) |
|---|---|---|---|
| Example 1 | 18.34 | 25.23 | 87.54 |
| Example 2 | 20.14 | 24.65 | 88.25 |
| Example 3 | 18.36 | 25.04 | 86.87 |
| Example 4 | 16.22 | 26.78 | 85.96 |
| Example 5 | 17.33 | 26.47 | 86.29 |
| Example 6 | 17.80 | 25.98 | 87.32 |
| Example 7 | 18.77 | 24.67 | 87.86 |
| Comparative Example 1 | 10.67 | 29.85 | 83.28 |
| Comparative Example 2 | 14.36 | 27.53 | 85.27 |
| Comparative Example 3 | 15.22 | 27.29 | 85.36 |

As can be seen from the test results in Table 1, compared with the conventional SBR binder and the solution-based PAA binder in Comparative Examples 1-3, the water-soluble binder provided in the present application, as a powder material, not only reduces the transportation costs and the packaging costs of solution-based binders, but also exhibits significantly improved adhesive strength and swelling inhibition capability compared with the solution-based PAA binders in the related art. Through the optimized design of the molecular weight of the copolymer, the peel strength of the negative electrode sheet containing the water-soluble binder in Examples 1-3 and 6-7 is 17.8-20.14 N/mm, the full-charge swelling rate is 24.65%-26.78%, and the capacity retention rate of the lithium-ion battery after 500 cycles at 60 °C is 86.87%-88.25%, thereby effectively improving the cycling performance of the lithium-ion battery. By comparing Examples 1-3 and 6-7 with Examples 4-5, it can be seen that through the design of the copolymerization monomers of the copolymer and the design of the specific molecular weight, the water-soluble binder can be further optimized in terms of adhesion, dispersibility, water solubility, volume swelling inhibition, etc. The slightly low dosage of the nitrile monomer in Example 4 leads to a decrease in the adhesion of the water-soluble binder; the relatively low molecular weight of the copolymer in Example 5 leads to a decrease in the adhesion, water solubility, and volume swelling inhibition capability of the water-soluble binder to varying degrees.

It should be noted that in the present application, the above examples are used to illustrate the water-soluble binder, the battery electrode sheet, and use thereof of the present application. However, the present application is not limited to the above examples. That is, the present application is not necessarily implemented as per the above examples. It will be appreciated by those skilled in the art that any modifications to the present application, equivalent substitutions of the starting materials of the product of the present application and the addition of auxiliary components, selections of specific modes, etc., all fall within the scope and disclosure of the present application.

## Claims

1. A water-soluble binder, comprising a copolymer, wherein polymerization monomers of the copolymer comprise a combination of a double-bond-containing nitrile monomer, a double-bond-containing amide monomer, a double-bond-containing carboxylic acid monomer, optionally a double-bond-containing sulfonic acid monomer, and optionally a fifth monomer; wherein the water-soluble binder is in powder form, and a mass percentage of the copolymer in the water-soluble binder is at least 92%.

2. The water-soluble binder according to claim 1, wherein the water-soluble binder has a D₅₀ particle sizer ranging from 1 µm to 100 µm.

3. The water-soluble binder according to claim 1, wherein:
the water-soluble binder is formulated into a first aqueous solution having a solid content of 1.0% by mass, and the first aqueous solution has a viscosity ranging from 200 cps to 20,000 cps at 25.0±0.1 °C;
the first aqueous solution has a light transmittance of at least 85%.

4. The water-soluble binder according to claim 1, wherein the water-soluble binder is formulated into a second aqueous solution having a solid content of 0.5% by mass, and the second aqueous solution has a pH value ranging from 6.0 to 9.0.

5. The water-soluble binder according to claim 1, wherein the copolymer has a weight-average molecular weight ranging from 200,000 to 3,000,000.

6. The water-soluble binder according to claim 1, wherein the copolymer has a molecular weight distribution ranging from 2 to 8.

7. The water-soluble binder according to claim 1, wherein the double-bond-containing nitrile monomer comprises acrylonitrile and/or methacrylonitrile;
the double-bond-containing amide monomer is selected from the group consisting of acrylamide, methacrylamide, N,N-diethylacrylamide, N,N-diethylmethacrylamide, N-ethylacrylamide, N-ethylmethacrylamide, N,N-dimethacrylamide, N,N-dimethylmethacrylamide, N-methacrylamide, N-methylmethacrylamide, N-isopropylacrylamide, N-isopropylmethacrylamide, 2-acrylamide-2-phenylethanesulfonic acid, and combinations thereof;
the double-bond-containing carboxylic acid monomer is selected from the group consisting of acrylic acid, methacrylic acid, sodium acrylate, sodium methacrylate, lithium acrylate, lithium methacrylate, and combinations thereof;
the double-bond-containing sulfonic acid monomer is selected from the group consisting of methacryl sulfonic acid, acryl sulfonic acid, sodium methacryl sulfonate, sodium acryl sulfonate, lithium methacryl sulfonate, lithium acryl sulfonate, and combinations thereof;
the fifth monomer is selected from the group consisting of ethyl acrylate, hydroxyethyl acrylate, butyl acrylate, hydroxybutyl acrylate, lauryl acrylate, stearyl acrylate, ethyl methacrylate, hydroxyethyl methacrylate, butyl methacrylate, hydroxybutyl methacrylate, lauryl methacrylate, stearyl methacrylate, alkyl polyoxyethylene ether acrylate, alkyl polyoxyethylene ether methacrylate, diethylene glycol vinyl ether, triethylene glycol vinyl ether, polyethylene glycol vinyl ether, and combinations thereof.

8. The water-soluble binder according to claim 1, wherein, based on the total mass of the monomers for polymerization of the copolymer:
a mass percentage of the double-bond-containing nitrile monomer ranges from 1% to 60%; a mass percentage of the double-bond-containing amide monomer ranges from 1% to 40%, a mass percentage of the double-bond-containing carboxylic acid monomer ranges from 5% to 95%, a mass percentage of the double-bond-containing sulfonic acid monomer ranges from 0 to 15%, and a mass percentage of the fifth monomer ranges from 0 to 20%.

9. An electrode material composition, comprising the water-soluble binder according to any one of claims 1 to 8.

10. The electrode material composition according to claim 9, wherein: the electrode material composition comprises a combination of an active substance, a conductive agent, and the water-soluble binder; and
a mass percentage of the water-soluble binder in the electrode material composition ranges from 0.3% to 3.0%.

11. A battery electrode sheet, comprising a current collector and a coating layer disposed on the current collector, wherein the coating layer comprises the electrode material composition according to claim 9 or 10.

12. An electrochemical energy storage device, comprising at least one of: the water-soluble binder according to any one of claims 1 to 8, the electrode material composition according to claim 9 or 10, or the battery electrode sheet according to claim 11, wherein the electrochemical energy storage device is selected from the group consisting of a lithium-ion battery, a sodium-ion battery, a supercapacitor, a fuel cell, and a solar cell.
